# EUROPÄISCHE PATENTSCHRIFT

(11) **EP 3 036 559 B1**
(45) Veröffentlichungstag und Bekanntmachung des Hinweises auf die Patenterteilung: **29.11.2017**
(21) Anmeldenummer: 14753100.8
(22) Anmeldetag: 21.08.2014
(51) Int. Cl.: G01S 7/486, G01S 7/497

(54) **VORRICHTUNG ZUR VERMESSUNG EINER OPTISCHEN ÜBERTRAGUNGSSTRECKE**
DEVICE FOR MEASURING AN OPTICAL TRANSMISSION PATH
DISPOSITIF PERMETTANT DE MESURER UN CHEMIN OPTIQUE DE TRANSMISSION

(30) Priorität: 22.08.2013 WO PCT/EP2013/067489
(43) Veröffentlichungstag der Anmeldung: 29.06.2016
(73) Patentinhaber: Elmos Semiconductor Aktiengesellschaft, 44227 Dortmund (DE)
(72) Erfinder: MELCHER, Rolf, 76646 Bruchsal (DE); STELLBERGER, Achim, 76646 Bruchsal (DE)
(74) Vertreter: dompatent von Kreisler Selting Werner - Partnerschaft von Patent- und Rechtsanwälten mbB
(86) Internationale Anmeldenummer: PCT/EP2014/067848
(87) Internationale Veröffentlichungsnummer: WO 2015/025011

(56) Entgegenhaltungen:
- EP-A1- 2 159 600
- EP-A2- 1 795 913
- WO-A1-2009/095629
- US-A- 4 366 378
- US-A1- 2004 056 199

## Beschreibung

Die Erfindung betrifft eine Vorrichtung zur Vermessung einer optischen Übertragungsstrecke.

Hierbei wird typischerweise eine Fotodiode in Sperrrichtung betrieben. Es hat sich als besonders vorteilhaft erwiesen, die Fotodiode zur Kompensation eines aus (z.B. Umgebungs-)Störstrahlung resultierenden Fotostroms durch eine spannungsgesteuerte Stromquelle zu bestromen und in einem spannungsmäßig vorbestimmten Arbeitspunkt zu halten.

Eine besonders vorteilhafte Anordnung zur Vermessung einer optischen Übertragungsstrecke oder zur Vermessung eines Objekts, das sich innerhalb einer solchen Übertragungsstrecke befindet, ist die Vermessung mit Hilfe einer Kompensationsmethode, wie sie z.B. unter dem Namen HALIOS® bekannt ist. Hierbei strahlen ein Kompensationssender und ein Sender gleichzeitig überlagernd in einen Empfänger ein. Das Signal des Kompensationssenders ist dabei zeitlich komplementär, d.h. um 180° phasenverschoben zu demjenigen des Senders gewählt. Das bedeutet, dass sich beide Signale bei gleicher Einstrahlamplitude in dem Empfängersignal zu einem Gleichsignal überlagern.

Eine Regelung erzeugt aus dem Empfangssignal ein Regelsignal. Mit diesem Regelsignal wird nun entweder der Sender oder der Kompensationssender oder auch nach einem festen Regelschema beide Sender geregelt.

Bei richtiger Vorzeichenwahl der Verstärkung des Reglers werden parasitäre Einflüsse eliminiert. Dies betrifft vor allem Verschmutzungen und Drift des Empfängers.

Für die Güte der Auswertung der von der Vorrichtung gelieferten Signale ist eine Beurteilung der Messsignalqualität erforderlich. Die Vorrichtung weist beispielsweise Verstärkerelemente, Integratoren o.dgl. auf, die, wenn sie außerhalb ihres vorgesehenen Arbeitspunktbereichs betrieben werden, fehlerhafte Signale liefern können.

Aus US-A-2004/0056199 ist ein Infrarot-Detektor bekannt, mit dessen Hilfe Hindernisse erkannt werden sollen. Im Zuge der Signalverarbeitung des Infrarot-Detektors werden nur dann Messsignale weiterverarbeitet, wenn der Messverstärker nicht in die Sättigung gelangt. Bei in Sättigung befindlichem Messverstärker kann dessen Offset-Spannung verändert werden, so dass der Verstärker nicht mehr in der Sättigung ist. Weitere Erkenntnisse werden jedoch bei der bekannten Vorrichtung aus der Tatsache, dass der Messverstärker in die Sättigung gelangt, nicht abgeleitet.

In EP-A-1 795 913 ist eine Laserabtastvorrichtung beschrieben, bei der das zu verarbeitende Messsignal mittels eines Verstärkers mit einstellbarer Verstärkung verstärkt wird.

Weitere elektro-optische Vorrichtungen sind aus EP-A-2 159 600, US-A-2010/0301193 und US-A-4 366 378 bekannt.

Aufgabe der Erfindung ist es, eine hinsichtlich der Überprüfung der Messqualität verbesserte Vorrichtung zur Vermessung einer optischen Übertragungsstrecke zu schaffen.

Zur Lösung dieser Aufgabe wird mit der Erfindung eine Vorrichtung zur Vermessung einer optischen Übertragungsstrecke vorgeschlagen, wobei die Vorrichtung versehen ist mit den Merkmalen des Anspruchs 1. Einzelne Ausgestaltungen der Erfindung sind Gegenstand der Unteransprüche.

Bei der erfindungsgemäßen Vorrichtung wird mit Hilfe eines oder mehrerer Detektoren überprüft, ob der Messverstärker unter- oder übersteuert ist oder, umgekehrt, ob der Messverstärker innerhalb seines Arbeitspunkt-Nennbereichs arbeitet. Wenn mehrere Messverstärker vorhanden sind, so wird eine mögliche Über- und/oder Untersteuerung bzw. eine möglicherweise nicht erfolgende Über- und/oder Untersteuerung pro Messverstärker erkannt. Anhand der Signale der Detektoren kann dann die Messsignalqualität beurteilt werden.

Als Detektor eignet sich z.B. ein Fensterdiskriminator, also ein Detektor, der erkennt, ob sich das (verstärkte) Ausgangssignal des Messverstärkers innerhalb oder außerhalb des als zulässig definierten Signalbereichs befindet. Liegt das Ausgangssignal innerhalb des Signalbereichs, so ist es verwertbar. Liegt es oberhalb der Obergrenze oder unterhalb der Untergrenze, ist es nicht brauchbar. Signalisiert der Detektor, dass das Signal sowohl oberhalb der Obergrenze als auch unterhalb der Untergrenze ist, ist das Messsignal ebenfalls nicht zu gebrauchen, wobei zusätzlich ein Defekt der Eingangsstufe der Vorrichtung bzw. des Messverstärkers detektiert werden kann.

Entscheidender aber ist, dass anhand eines insbesondere sich wiederholenden Musters von Detektorausgangssignalen auf mögliche Störquellen rückgeschlossen werden kann, denen die Vermessungsvorrichtung ausgesetzt ist. Wird ein derartiger Störer anhand seiner charakteristischen Parameter erkannt, so kann die Vorrichtung in veränderter Weise angesteuert werden, so dass sich der Störer nicht mehr auf das Messsignal und dessen Qualität auswirkt bzw. im weniger günstigen Fall weniger stark oder auch anders auswirkt. Erfindungsgemäß erfolgt dies, indem der Kompensationssender und der Sender mit einem Sende- bzw. Kompensationssendesignal angesteuert werden, das möglichst orthogonal zum Störmuster ist (z.B. auf einer anderen Frequenz liegt und/oder einen Spread-Spectra-Code enthält und/oder ein bandbegrenztes Signal ist, das die Störer-Frequenz nicht enthält). Es ist auch möglich, bei der Detektion eines Störers die Topologie oder die Parametrisierung der Vorrichtung zu verändern, um gegenüber dem Störer unempfindlicher zu werden.

Weitere Maßnahmen zur Reaktion auf detektierte Störer oder Störmodelle, wie beispielsweise ein "Hopping" der Modulationsfrequenz, die Zu- bzw. Abschaltung von Filtern o.dgl. sind ebenfalls möglich.
Der mindestens eine Messverstärker der Ansteuer- und Auswerteeinheit ist zweckmäßigerweise als Integrator beschaltet und weist eine vorzugsweise einstellbare Kapazität auf, die den Ausgang des Verstärkers auf dessen Eingang zurückkoppelt. Mit Hilfe der Verstellbarkeit der Kapazität lässt sich der Arbeitspunkt-Nennbereich des Messverstärkers verändern, d.h. die Grenzen einer Über- bzw. Untersteuerung des Messverstärkers verändern. Die Möglichkeit des Kurzschließens der Kondensatoren erlaubt es, die Integratoren wieder rückzusetzen.

Schließlich kann zur Beurteilung der Messqualität auch ein Parameter herangezogen werden, der ein Kompensationssignal repräsentiert, das dem Ausgangssignal des Empfängers zur Kompensation von Störstrahlung überlagert wird, welcher der Empfänger ausgesetzt ist. Dabei kann der Parameter die Größe des Kompensationssignals und/oder dessen zeitlichen Verlauf repräsentieren. Anhand dieses Parameters kann also auf die Intensität und ggf. Art und Weise der Störstrahlung rückgeschlossen werden.

In weiterer vorteilhafter Ausgestaltung der Erfindung kann schließlich vorgesehen sein, dass die Ansteuer- und Auswerteeinheit bei während einer Beobachtungsphase erfolgender Ermittlung eines zeitlichen Musters aus erkannten Unter- und/oder Übersteuerungen des mindestens einen Messverstärkers und, sofern detektiert, des Parameters der Störstrahlungs-Kompensationseinheit den mindestens einen Messsender und mindestens einen ggf. vorhandenen Kompensationssender in gegenüber der Beobachtungsphase veränderter Weise ansteuert und/oder dass die Topologie und/oder die Parametrisierung der Vorrichtung bei während einer Beobachtungsphase erfolgender Ermittlung eines zeitlichen Musters aus erkannten Unter- und/oder Übersteuerungen des mindestens einen Messverstärkers und, sofern detektiert, des Parameters der Störstrahlungs-Kompensationseinheit veränderbar ist.

Wie bereits weiter oben beschrieben, kann die Vorrichtung durch das Erkennen von Störmustern gegenüber dem Störer unempfindlich gemacht werden. Beispielsweise erfolgt dies, indem
a) eine Änderung der Verstärkung des Verstärkers durch Überbrückung des Rückkoppelzweiges (Änderung der Topologie z.B. mit Schaltern, wie z.B. den Schaltern 22,23) erfolgt;
b) eine Änderung der Integrationskonstante durch die Kondensatoren bzw. Kapazitäten 20,21 erfolgt, wodurch sich der Anstieg verringert.

Die jeweilige Änderung erfolgt immer gleichsinnig in beiden Ästen.

Die Kapazitäten 20,21 werden verkleinert, wenn eine Unter- oder eine Übersteuerung des Messverstärkers detektiert wird.

Vor der Messung werden die Kapazitäten entladen, z.B. durch Schalter, wie die Schalter 22,23.

Es wird nicht der Offset des Verstärkers verändert, sondern die Messfrequenz und/oder die Integrationskonstante (Kapazität 21,20) und/oder die Verstärkung.

Die zuvor beschriebene Möglichkeit, die Vorrichtung gegenüber einem Störer, der Störstrahlung einspeist, unempfindlich zu machen, ist als Weiterbildung aufzufassen, die unabhängig von der Beurteilung der Messsignalqualität eigenständig ist.

Die Erfindung wird nachfolgend anhand eines Ausführungsbeispiels sowie unter Bezugnahme auf die Zeichnung näher erläutert. Im Einzelnen zeigen dabei:
- Fig. 1: eine Übersicht über das Gesamtsystem als Blockschaltungsdiagramm,
- Fig. 2: den Zeitverlauf verschiedener Signale des Gesamtsystems gemäß Fig. 1 während eines Messintervalls bzw. während eines Messzyklus und
- Fign. 3 und 4: Diagramme zur Verdeutlichung einer (Auto-)Kalibrierung des Gesamtsystems.

Die Erfindung wird nachfolgend anhand einer Vorrichtung zur störstrahlungskompensierten Ansteuerung einer Fotodiode und zur Auswertung des Fotostroms beschrieben, die allerdings Merkmale enthält, die zur Realisierung der Erfindung nicht zwingend erforderlich sind.

Bei der störstrahlungskompensierten Vorrichtung wird die Empfangsdiode D über zwei Anschlüsse betrieben. Über die Schaltungsknoten 61,62 wird die Empfangsdiode D von zwei gesteuerten Stromquellen 27,28 bestromt. Hierbei erfassen zwei Verstärker 26,29 die Potenziale auf den von den Anschlüssen ausgehenden Eingangsleitungen 30,31. Ändert sich der Arbeitspunkt der Diode zum Beispiel durch permanente Bestrahlung mit Sonnenlicht, so ändert sich der generierte Fotostrom. Der Spannungsabfall über der Empfangsdiode D ändert sich und die Arbeitspotenziale der Eingangsleitungen 30,31 und damit an den Eingängen der Verstärker 26,29. Dieses wird durch die Verstärker 26,29 registriert. Diese vergleichen die Potenziale auf den Eingangsleitungen 30,31 jeweils mit einem Referenzpotenzial Ref1, Ref2. Die Ausgänge der Verstärker 26,29 regeln die Stromquellen 27,28 nun so nach, dass die Spannungswerte der Eingangsleitungen 30,31 wieder den Vorgaben entsprechen. Koppelkondensatoren 24,25 bilden eine Barriere für die Gleichspannungspegel auf den Eingangsleitungen 30,31 zu nachgeordneten Schaltungen. Die Kondensatoren 24,25 sind auf der den Anschlüssen abgewandten Seite mit den Eingängen zu Messverstärkern 18,19 verbunden. Die Ausgänge 33,34 der Messverstärker 18,19 sind jeweils über einstellbare Kapazitäten 20 bzw. 21 auf ihre Eingänge zurückgekoppelt. Eine Differenzstufe 35 bildet das Differenzsignal 63 der beiden Verstärkerausgangssignale. Im Idealfall soll dieses Signal 63 das Nutzsignal der Fotodiode darstellen.

Wie bereits zuvor beschrieben, führt die oben skizzierte Regelung durch die Verstärker 26,29 der beiden spannungsgesteuerten Stromquellen 27 bzw. 28 und die Änderung der Einstellung der Stromquellen 27,28 zu einer Belastung des Nutzsignals, was die Reichweite massiv einschränkt.

Der erfindungsgemäßen Vorrichtung bzw. dem erfindungsgemäßen Verfahren liegt nun die Erkenntnis zugrunde, dass bei den meisten Anwendungen, insbesondere im Zusammenhang mit einer Gestensteuerung für mobile Geräte, ein permanenter Messbetrieb gar nicht notwendig oder erwünscht ist. Ein solcher Betreib verbraucht Energie, die insbesondere bei mobilen Geräten äußerst "kostbar", weil nur begrenzt verfügbar, ist.

Die Vorrichtung sollte also zeitabhängig in verschiedenen Systemzuständen, d. h. in einzelnen zeitlich getrennten und aufeinanderfolgenden Messintervallen betrieben werden, die jeweils mindestens eine Messphase aufweisen. In diesem Messzustand wird die Nachregelung durch die Stromquellen 27,28 praktisch ausgeschaltet. Einzig die Kondensatoren 24,25 halten die jeweiligen Arbeitspunkte. Dies ist gleichzusetzen mit einer Änderung des Innenwiderstands der Stromquellen 27,28.

Eine solche schlechte (weil "träge") Regelung verhindert aber die Anpassung an eine Fremdlichtbestrahlung. Es ist daher sinnvoll, pro Messintervall einen weiteren Zustand, nämlich eine (Mess-)Vorbereitungsphase zu definieren, in der der Innenwiderstand der Stromquellen 27,28 minimal ist. In diesem Zustand regeln die Stromquellen schnell nach. Ein Nutzsignal würde in der Vorbereitungsphase stark belastet und verfälscht. Daher wird in dieser Vorbereitungsphase noch keine Messung durchgeführt.

In einer nicht gezeigten Sample-and-Hold-Schaltung wird das Ergebnis der jeweiligen Messung typischerweise zwischengespeichert.

Ein Problem, das sich jedoch nun ergibt, besteht darin, dass eine Störung, die während einer Messung auftritt, die Messverstärker 18,19 über- oder untersteuern kann.

Ein solchermaßen gestörtes Messergebnis ist nicht verwendbar. Daher ist es sinnvoll, das Messergebnis quantitativ zu bewerten.

Im einfachsten Fall kann dies beispielsweise dadurch geschehen, dass die Messverstärker 18,19 je ein Signal für Übersteuerung und je ein Signal für Untersteuerung ausgeben. Somit sind 16 Zustände des Systems von zwei Messverstärkern 18,19 mit je zwei Bewertungssignalen möglich. Von diesen sind nicht alle sinnvoll, da beispielsweise eine gleichzeitig auftretende Überund Untersteuerung nicht realistisch, jedoch trotzdem fehlerhaft ist.

Trotzdem bildet das vier-Bit-Wort, das auf diese Weise gebildet wird, eine quantitative Bewertung jedes Messergebnisses.

Im Gegensatz zum Stand der Technik werden also keine Transimpedanzverstärker, sondern Integratoren, die Teil der besagten Messverstärker 18,19 sind, am Eingang des Systems verwendet.

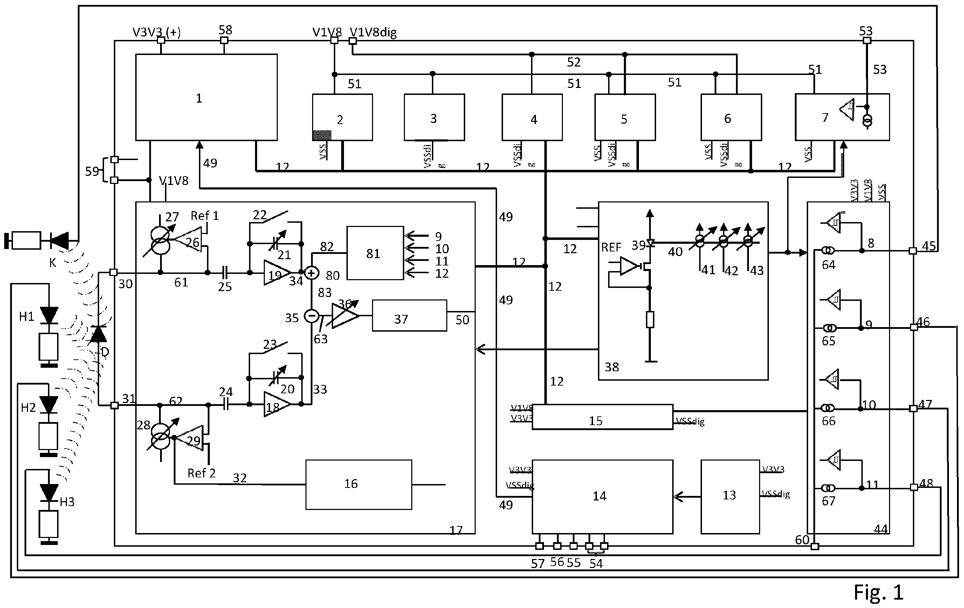

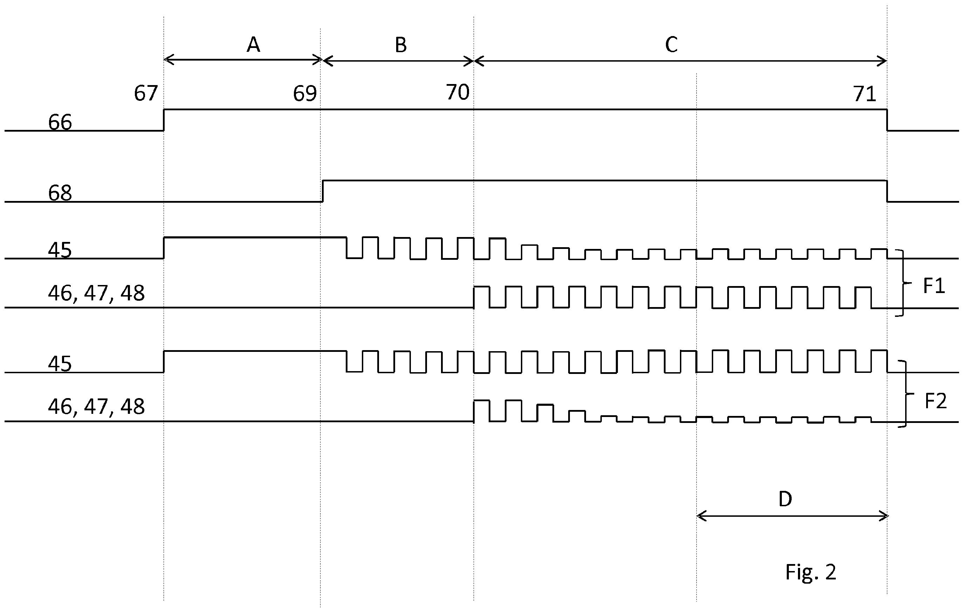

Der Ablauf eines Messintervalls wird beispielsweise durch den Digital-Control-Block 4 des (Block-)Schaltbilds nach Fig. 1 gesteuert. Durch dessen Ablaufsteuerung wird ein Messungsaktivierungssignal "Measure" (Bezugszeichen 66, Fig. 2) zu Beginn der Messung (Bezugszeichen 67, Fig. 2) aktiviert. Damit beginnt die erste Vorbereitungsphase A. In dieser Phase A regeln die Stromquellen 27,28 niederohmig den Arbeitspunkt der Empfangsdiode D nach. Der Ausgang der Stromversorgung für eine Kompensationsdiode K wird aktiv geschaltet. Hierdurch bestrahlt die Kompensationsdiode K bereits die Fotodiode D. Die Kompensationsdiode K wird zunächst nicht moduliert. Durch die Niederohmigkeit der Stromquellen 27,28 kommen die Messverstärker 18,19 schnell in ihre Arbeitspunkte. Die Kapazitäten 20,21 bzw. Koppelkondensatoren 24,25 werden auf ihre Arbeitspegel aufgeladen. Die Stromquellen 64,65,66,67 für den Betrieb von in diesem Ausführungsbeispiel drei Messsendedioden H1, H2, H3 (wegen der mehrdimensionalen insbesondere 3D-Gestenerkennung) und die Kompensationsdiode K werden auf die jeweiligen Betriebswerte eingestellt.

Am Ende der Phase A zum Zeitpunkt 69 (Fig. 2) wird das Signal "hold" (siehe Bezugszeichen 68, Fig. 2) aktiv. Die spannungsgesteuerten Stromquellen 27,28 gehen von ihren bis dahin eingenommenen niederohmigen in einen hochohmigen Zustand. Damit werden ihre Arbeitspunkte "eingefroren". Zu diesem Zeitpunkt sollte das Differenzsignal 63 der Ausgänge der Messverstärker 18,19 konstant Null sein, da die Arbeitspunkte eingeregelt sind.

Da auch das Umschalten in den hochohmigen Zustand zu Störungen führt, ist es sinnvoll, noch einige Zeit verstreichen zu lassen, bis die eigentliche Messung beginnt. Diese Zeit wird Stabilisierungsphase oder zweite Vorbereitungsphase B (Fig. 2) genannt. Sie endet zum Zeitpunkt 70 (Fig. 2).

Im einfachsten Fall handelt es sich bei den Modulationssignalen 45,46,47,48 für die Kompensationsdiode K bzw. für die Messsendedioden H1,H2,H3 um 180° phasenverschobene Rechtecksignale, die in der Amplitude regelbar sind. (siehe in Messphase C Fig. 2)

Die Messung beginnt, indem z.B. die Abstrahlung der Kompensationsdiode abgeschwächt oder gar ausgeschaltet wird (siehe Bezugszeichen 45 und 69 in Fign. 1 und 2). Gleichzeitig wird typischerweise mindestens eines der Sendesignale (siehe Bezugszeichen 46 und/oder 46 und/oder 47 in Fign. 1 und 2) eingeschaltet. Die typischerweise mindestens eine Messsendediode H1 und/oder H2 und/oder H3 bestrahlt mit Umweg über die zu vermessende Übertragungsstrecke die (Empfangs-)Fotodiode D. Bei mehreren Sendedioden werden diese (z.B. zyklisch) sequentiell angesteuert.

Die Kompensationssendediode K und die typischerweise mindestens eine Messsendediode H1 oder H2 oder H3 werden abwechselnd abgeschwächt bzw. zu verstärkter Abstrahlung veranlasst. Zunächst wird dies zu einer verbleibenden Modulation des Ausgangssignals der Eingangsstufe führen. Nach einer Verstärkung durch einen Verstärker 36 kann das so empfangene modulierte Signal mit einem Demodulator in ein Gleichsignal verwandelt werden. Dies kann zur Regelung der Amplitude der Modulation der einen Messsendediode oder jeweils einer der Sendedioden H1,H2,H3 und/ oder der Amplitude der Modulation der Kompensationsdiode K verwendet werden.
In Fig. 2 wird beispielhaft als Fall F1 eine Regelung der Kompensationsdiode K gezeigt und als Fall F2 eine Regelung der Messsendediode bzw. -dioden H1,H2,H3. Die Regelung kann dabei für die Messsendedioden H1,H2 und H3 unterschiedlich sein. Typischerweise werden darüber hinaus die Messsendedioden H1,H2 und H3 nicht gleichzeitig sondern zeitversetzt betrieben. Dabei können auch mehr als eine Empfangsdiode zum Einsatz kommen. Der Zeitversatz wird dabei typischerweise so gewählt, dass immer nur eine Empfangsdiode D und eine Sendediode H1,H2,H3 gleichzeitig aktiv sind.
Im Folgenden wird die Regelung über die Änderung der Modulationsamplitude der Sendediode H1,H2,H3 erläutert.
Hierbei regelt der so erhaltene Messwert die Amplitude der jeweiligen Messsendediode H1,H2,H3 nach. Es hat sich gezeigt, dass es sinnvoll ist, diesen Wert vor der Gegenkopplung zu verstärken. Dieses Prinzip ist auch aus Operationsverstärkerschaltungen bekannt und dient der Unterdrückung parasitärer Faktoren und Einflüsse. Zum besseren Verständnis sei hier auf die nachfolgend genannten Schriften und Patentanmeldungen verwiesen: DE-B-103 46 741, EP-A-2 546 620, EP-A-2 356 000, EP-B-1 410 507, EP-B-1 435 509, EP-A-2 418 512, EP-B-1 269 629, DE-A-103 22 552, DE-B-10 2004 025 345, EP-A-2 405 283, DE-C-44 11 773, WO-A-2012/163725, DE-A-2006 020 579, DE-B-10 2005 045 993, EP-B-1 979 764, DE-A-10 2012 024 778, DE-A-10 2013 000 376, DE10 2013 003 791.3, DEA-10 2013 000 380, WO-A-2014/096385, WO-A-2013/124018, DE-B-10 2013 002 304, EP-A-2 624 019, DE-A-10 2012 025 564, DE 10 2013 002 674.1, DE-A-10 2013 222 936, DE-A-10 2012 015 442, DE-A-10 2012 015 423, DE-B-10 2012 024 597, EP-A-2 679 982, EP-A-2 597 482, DE-A-10 2013 002 676, EP-A-2 653 885.

Durch die Regelung stellt sich im Idealfall ein Gleichgewicht ein und das Ausgangssignal 50 des Demodulators 37 stellt nach der besagten Verstärkung ein Maß für die Dämpfung des Sendesignals im Übertragungskanal dar.

Die erfindungsgemäße Steuerung der Stromquellen 27,28 macht sich an den Eingangsleitungen 30,31 in einem Eingangswiderstand dahingehend bemerkbar, dass die Stromquellen in Abhängigkeit von typischerweise mindestens zwei Phasen eines Messzyklus (Bezugszeichen A und C, B und C oder A und B und C der Fig. 2) schwanken.

Natürlich ist die Wirksamkeit der spannungsgesteuerten Stromquellen 27,28 durch die realen Gegebenheiten eingeschränkt. Die Stromquellen 27,28 können nur bis zu einem Maximalstrom versuchen, den jeweils vorgegebenen Spannungspegel zu halten.

Das Messintervall (von Bezugszeichen 67, Fig. 2, bis Bezugszeichen 71, Fig. 2) wird dadurch beendet, dass das "Measure"-Signal (66) am Ende des Messzyklus (siehe Bezugszeichen 71, Fig. 2) wieder inaktiv wird. Alle Sendesignale werden abgeschaltet und das Messergebnis typischerweise beispielsweise in einer (nicht gezeichneten) Sample-and-Hold-Schaltung eingefroren.

Je nach Anwendung ist es sinnvoll, in regelmäßigen Zeitabständen ein derartiges Messintervall (von Bezugszeichen 67, Fig. 2, bis Bezugszeichen 71, Fig. 2) in kürzeren oder längeren Zeitabständen zu wiederholen. Höhere Wiederholfrequenzen für die Messsequenzen haben dabei allerdings eine höhere Stromaufnahme zur Folge.

Als eine weitere Maßnahme zur Verbesserung der optischen Abstandsmessung kann das System in die Lage versetzt sein, zumindest einige und typischerweise jeden Messwert mit einem Qualitätswert der Messung zu versehen, also eine Messsignalqualitätsermittlung durchzuführen. Diese Maßnahme bildet im Rahmen dieser Anmeldung den eigentlichen Erfindungsgegenstand.

Somit ergibt sich bei mehreren aufeinanderfolgenden Messintervallen eine Folge von Messwerten mit zugehörigen Qualitätswerten, die es einem Messwertschätzer erlauben, einen optimierten Messwert zu schätzen und eine Wahrscheinlichkeit der Korrektheit dieses Messwertes anzugeben. Der daraus resultierende Messwertvektor kann beispielsweise als Basis für die Feature-Extraktion einer Gestenerkennung genutzt werden.

Dies ist insbesondere dann von Nutzen, wenn ein Störer nicht, wie z.B. Sonnenlicht, mit relativ niedriger Frequenz (beispielsweise aufgrund von Abschattung durch z.B. Bäume), sondern wie z.B. bei Leuchtstoffröhren oder bei der Fahrt in einem Cabrio im Sonnenschein unter Bäumen hindurch relativ schnell moduliert wird. Selbst wenn die Störungsfrequenz in der Nähe der Modulationsfrequenz der Messsendedioden H1,H2,H3 und des Kompensationssenders K liegt, wird diese Frequenz in der Regel nicht korrekt getroffen. Es kommt zu einer Schwebung im Regelsignal, die erkannt und genutzt werden kann. Die Qualität der Messung wird typischerweise mit der Schwebungsfrequenz zeitabhängig schwanken. Da das System infolge der Bewertung der Messergebnisse nur solche Messwertsequenzen auswertet, die relativ ungestört sind, kommt es de facto somit automatisch zu einer Abtastung des Messsignals nur zu relativ ungestörten Zeiten. Darüber hinaus ist es denkbar, dass nicht nur als gestört erkannte Messwerte verworfen werden, sondern auch solche, für die ein Schätzer eine hohe Störungswahrscheinlichkeit ermittelt. Dies können beispielsweise direkt vorausgehende oder direkt folgende Messwerte sein. Auch sollte ein solches Messsystem Gegenmaßnahmen bei erkannten Störungen einleiten.

Hierzu gehört beispielsweise eine Änderung der Messfrequenz. Dies kann sowohl die Wiederholfrequenz der Messintervalle als auch die Modulationsfrequenz der Messsendedioden H1,H2,H3 und der Kompensationssendediode K betreffen. Auch kann die Schaltung anders parametrisiert werden. Beispielsweise können die Zeitkonstanten der als Integratoren wirkenden Messverstärker 18,19 geändert werden, indem die Kapazitäten 20,21 veränderbar sind. Im Extremfall können die Integratoren durch Überbrückung ihrer Kapazitäten 20,21 mit Hilfe der programmierbaren Schalter 22,23 überbrückt werden. Es kommt also, wie man an diesem Beispiel sieht, auch eine Änderung der System- oder Schaltungstopologie in Frage. Die Integratoren werden dann zu reinen Impedanzwandlern.

Eine weitere Verbesserung der Vorrichtung kann also durch eine Beurteilung der Qualität des Messsignals und/oder durch eine Regelung zur Optimierung der Messergebnisse erreicht werden. Im Allgemeinen wird die Rückkopplungsschleife durch Software geschlossen, da die Regelalgorithmen sehr stark applikationsabhängig sind.

Als Stellglied für diese Messsignalqualitätsregelung dient typischerweise eine Änderung der Systemparameter und/oder der Systemtopologie oder -struktur.

Eine weitere Möglichkeit, die in die Qualitätsbewertung eines Messergebnisses einfließen kann, ist die Auswertung der Stromquellen-Ströme. Hierzu wird im Block 16 ("Extrinsic Light Measurement" bzw. "Messung des äußeren Lichtes") zeitabhängig der Strom gemessen, den die Stromquelle oder Stromquellen 27,28 liefern. Diese Messergebnisse können der Software zur Verfügung gestellt werden. Diese kann beispielsweise durch eine Fourier-Transformation die Störfrequenzen bestimmen, die das Messsignal stören. Es ist besonders vorteilhaft, die Modulationsfrequenz der Messsendedioden H1,H2,H3 und der Kompensationsdiode K und die Wiederholfrequenz der Messintervalle (Bezugszeichen 67, Fig. 2, bis Bezugszeichen 71, Fig. 2) jeweils so zu wählen, dass sie mit den Störfrequenzen möglichst nicht interferieren. Somit kann beispielsweise durch "Frequency-Hopping" die Störsignal-Robustheit angehoben werden.
Des Weiteren ist es denkbar, statt eines monofrequenten Sendesignals ein bandbegrenztes Signal zu verwenden und so schmalbandige Störer durch ein Spread-Spectra-Verfahren in ihrem Einfluss auf das Messergebnis zu reduzieren. Solche möglichen Sendesignale sind beispielsweise geeignete Pseudozufallsfolgen (siehe hierzu auch EP-A-2 631 674). Eine weitere einen selbstständigen Erfindungsgedanken repräsentierende Maßnahme ist die Einführung und/oder Anhebung einer Schwelle für die Erkennung der Annäherung eines Objekts an die Messsendedioden H1,H2,H3 /Empfangsdiode D. Hierbei handelt es sich um eine nichtlineare Filterfunktion, die typischerweise in dem Block 37 der Fig. 1 realisiert ist, aber auch in einer nachfolgenden Verarbeitungsstufe realisiert sein kann. Dabei werden alle Messwerte unterhalb oder oberhalb einer Schwelle beispielsweise auf einen vordefinierten Wert fixiert.
Schließlich kann aufgrund der Messungen ein rechnerisches Modell eines Störers parametrisiert werden und Zeitpunkte und Einstellungsparameter für das Messsystem prognostiziert werden, bei und mit denen das nächste Messintervall mit einer besonders guten Qualität durchgeführt werden kann. Nachfolgend soll auf eine weitere Besonderheit der Schaltung nach Fig. 1 eingegangen werden, bei der es sich um einen weiteren selbstständigen Erfindungsgedanken handelt.
Gerade für mobile Anwendungen ist es besonders wichtig, möglichst wenig Energie zu verbrauchen. Daher ist es besonders günstig, wie oben beschrieben, die Messsendedioden bzw. eine der Messsendedioden H1,H2,H3 und nicht die Kompensationsdiode K zu modulieren und das System nur bei Bedarf zu betreiben. Um die erforderliche Betriebsenergie weiter zu reduzieren, ist es sinnvoll, das System nicht zu betreiben, wenn es beispielsweise komplett abgeschattet ist. Dies ist beispielsweise bei einem Einsatz in einem Mobiltelefon dann der Fall, wenn der Nutzer sich das Telefon zum Telefonieren an das Ohr hält. Für die Erkennung derartiger Nutzungssituationen ist es daher sinnvoll, einen weiteren, typischerweise passiven Sensor vorzusehen, der beispielsweise durch Messung des Umgebungslichts die Nutzungssituation vorklassifizieren kann. Auch hier ist ggf. der Einsatz einer innenwiderstandsmodulierten Störstrahlungs-Kompensationsschaltung sinnvoll, wenn modulierte Signale erkannt werden sollen. Die Schaltung gemäß Fig. 1 verfügt über eine solche Schnittstelle 53 (siehe in Fig. 1 oben rechts), die mit einer entsprechenden Eingangs-Hardware 7 versehen ist.

Darüber hinaus kann es sinnvoll sein, das ganze System in einen Energiesparmodus zu versetzen, um den Energieverbrauch noch weiter zu reduzieren. Hierbei muss beachtet werden, dass moderne integrierte Schaltungen typischerweise intern mit einer niedrigeren Spannung betrieben werden, als ihre Peripherie. Insoweit ist ein Spannungsregler 1 von Vorteil, der die internen Betriebsspannungen bereitstellt. Dieser Spannungsregler 1 verbraucht im Energiesparmodus unnötig Energie. Es ist daher sinnvoll, einen möglichst kleinen Teil (siehe Funktionsblock 14) der Schaltung so zu realisieren, dass er direkt mit der Betriebsspannung betrieben werden kann. Dieser Funktionsblock 14 hat einzig die Aufgabe, über eine Schnittstelle 54 bis 57 die Minimalkommunikation zum Hauptprozessor, mit dem das Messsystem kommuniziert, sicherzustellen. Die Schnittstelle weist beispielsweise eine serielle TX- und RX-Zweidraht-Leitung oder eine I²C-Bus-Schnittstelle 54, einen Interrupt-Ausgang 55 für den Hauptprozessor, der auf einem definierten Potenzial liegen muss, einen nicht maskierbaren Messsystem-Reset 56 und einer Referenzspannungseingang 57 auf. Alle anderen Systeme sind ausgeschaltet. Wenn möglich wird auch der normale Systemoszillator 6 abgeschaltet und stattdessen dieser Funktionsblock 14 der Schaltung mit einer niedrigen Frequenz aus einem Minimaloszillator 5 versorgt. Dieser ist wesentlich kleiner, da er nicht den gesamten IC treiben muss.

Somit sind im Energiesparmodus nur die Standard-Blöcke 14 und 6 aktiv. Ausgeschaltet ist insbesondere die Band-Gap-Referenz 2, der Block 4 (Digital-Control), der Spannungsregler 1 und alle Messverstärker und Empfangs- und Sendeeinrichtungen.

Handelt es sich bei der Schnittstelle 54 beispielsweise um eine I²C Schnittstelle, so ist es sinnvoll, den Funktionsblock 14 so zu gestalten, dass er nur einen ganz bestimmten Befehl auf dem Bus erkennen kann, der an eine ganz genau vorgegebene Registeradresse gesendet wird.

Ein solches Protokoll kann beispielsweise so aussehen, dass der Funktionsblock 14 eine Sequenz aus einem Start-Bit sowie der Slave-Adresse und aus einem Bit zur Signalisierung eines Schreibzugriffs erkennt und daraufhin ein Acknowledge-Bit ausgibt, woraufhin der Hauptprozessor die Registeradresse sendet, der Funktionsblock 14 ein Acknowledge-Bit sendet und der Hauptprozessor daraufhin ein Parity-Bit sendet. Hat der Funktionsblock 14 alle diese Daten als korrekt erkannt, werden der Spannungsregler, die Bandgap-Referenz 2 und alle anderen Teile der Schaltung in einer vordefinierten Sequenz nacheinander und/oder parallel, je nach Typ und Erfordernis, hochgefahren. Die normale I²C-Bus Kommunikation wird dann durch den Block 4 (Digital Control) wieder bis zu einem nächsten Einschlafbefehl übernommen. Nach Empfang eines solchen Einschlafbefehls veranlasst der Block 4 (Digital control) die wesentlichen Teile des Messsystems, in den Energiesparmodus überzugehen. Der letzte Teil der Abschaltsequenz muss jedoch vom Funktionsblock 14 gesteuert werden. Dies betrifft insbesondere die Abschaltung der Energieversorgung durch Abschaltung des Spannungsreglers 1, des Oszillators 6 und des Blocks 4 (Digital Control) selbst.

Es ist weiter sinnvoll, wenn der Funktionsblock 14 über einen internen Zeitgeber verfügt, der in regelmäßigen Abständen das System aufwecken kann, ohne dass es dazu des Empfangs eines Befehls des Hauptprozessors über die Schnittstelle 54 bedarf.

Es kann sinnvoll sein, wenn das System nach Durchführung von bezüglich Anzahl und Art vordefinierten Messungsintervallen wieder in den Energiesparmodus wechselt, ohne dass es hierzu eines gesonderten Befehls des Hauptprozessors über die Schnittstelle 54 von außen bedarf.

Hierbei ist es sinnvoll, wenn die Messwerte und vorzugsweise auch die Messwertqualitäten in einem (nicht gezeigten) Speicher abgelegt werden. Zu den dort abgelegten Messwerten können auch Konfigurationsdaten des Systems zählen (beispielsweise mit welchem der Sendedioden H1,H2,H3, mit welcher der Kompensationsdiode K und mit welcher Empfangsdiode D wann und mit welcher Qualität Messwerte aufgenommen wurden. Auch können dort die Messergebnisse weiterer Messignalbewertungsblöcke wie beispielsweise des Blocks 16 (Extrinsic Light Measurement) abgelegt werden.

Im normalen Messbetrieb darf aber trotz des Energiesparmodus keine Energie "verschwendet" werden. Daher kann beispielsweise die Bandgap-Referenz 2, die ja nur eine Referenzspannung für die Verwendung an verschiedenen Stellen im Messsystem liefert, zeitweise abgeschaltet werden, wenn deren Spannung beispielsweise in einer Sample-and-Hold-Schaltung zwischengespeichert und gepuffert ist. Die Bandgap-Schaltung wird dann nur zum Erneuern der unweigerlich langsam abfließenden Ladungen aus dem Speicherelement der Sample-and-Hold-Schaltung (typischerweise ein Kondensator) von Zeit zu Zeit angeschaltet.

Ein weiteres selbstständig erfindungswesentliches Merkmal der Vorrichtung ergibt sich aus der notwendigen Kalibration des Messsystems.

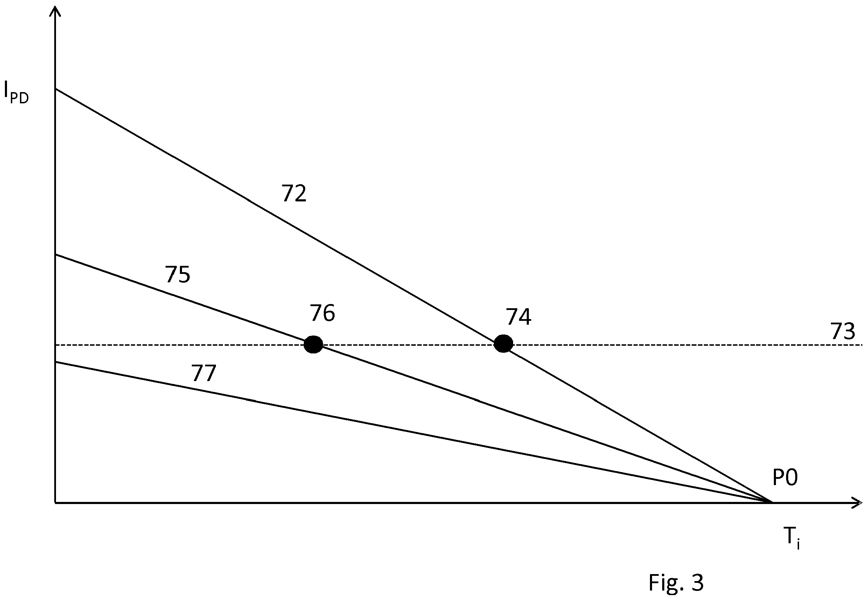

Hierzu ist in Fig. 3 die Regelcharakteristik des Systems bei Regelung der Sendediodenamplitude Tᵢ dargestellt. Die Amplitude des auf die jeweilige Messsendediode H1 H2,H3 zurückzuführenden Anteils (siehe 72,75,77 in Fig. 3) des Fotostroms I_{PD} in der/einer Empfangsdiode D hängt dabei von der Sendediodenamplitude Tᵢ ab. Die Amplitude des auf die Kompensationsdiode K bzw. jeweilige Kompensationsdiode K zurückzuführenden Anteils (siehe Linie 73 in Fig. 3) des Fotostroms I_{PD} in der/einer Empfangsdiode D hängt im Gegensatz dazu von der Senderamplitude Tᵢ nicht ab.

Wenn der Regler eingeschwungen ist, ist das Differenzsignal 63 ein Gleichsignal. Der auf das Sendesignal zurückzuführende Anteil ist dann im Differenzsignal 63 Null. Die maximale Distanz, ab der ein sich der Empfangsdiode näherndes Objekt bzw. bis zu der sich ein von der Empfangsdiode entfernendes Objekt noch erkannt werden kann, ist bestimmt durch die Regelcharakteristik und/oder Tatsache, dass bei maximaler Amplitude des Sendediodensignals von dem Objekt noch ein so großer Anteil des Sendediodensignals reflektiert wird, dass an der Empfangsdiode ein Signal mit mindestens der Amplitude des Kompensationsdiodensignals empfangen wird. Für einen großen Fotostrom 72, der gleichbedeutend mit einem nahen Objekt ist (und damit für eine steile Regelcharakteristik), ergibt sich dabei als Schnittpunkt mit 73 ein erster Arbeitspunkt 74. Für einen niedrigeren Fotostrom 75 (und damit bei flacherer Regelcharakteristik) ein weiterer zweiter Arbeitspunkt 76. Bei sehr weit entfernten Objekten kann das rückgestrahlte Licht aber so gering werden, dass sich überhaupt kein Arbeitspunkt mehr ergeben kann. Die Regelcharakteristik im Falle des Fotostroms 77 ist dann so flach, dass sich keine Kreuzung mehr mit der Linie 73 ergibt, die die Amplitude der Kompensationsdiode K repräsentiert, so dass keine sinnvolle Regelung möglich ist.

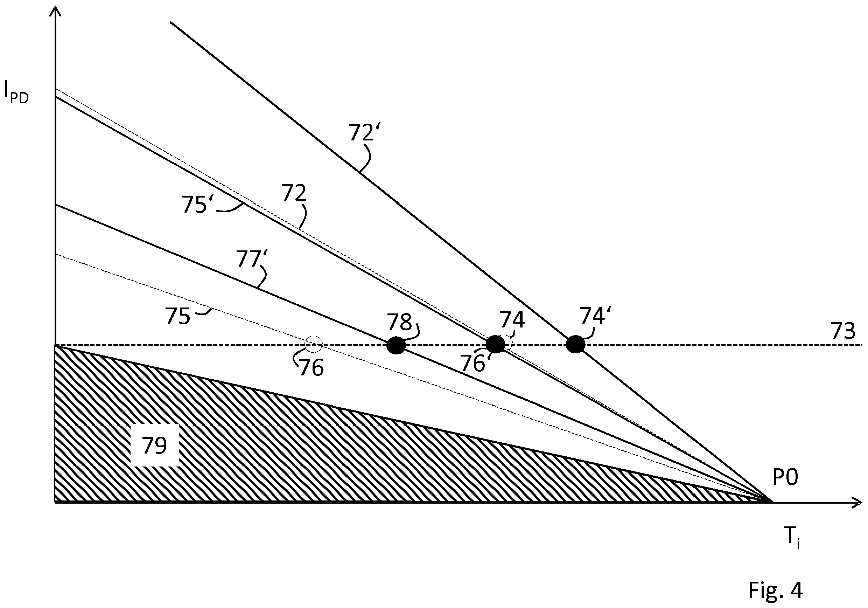

Hier bestehen nun zwei Möglichkeiten: Entweder wird das Kompensationsdiodensignal bei derartig schwachen Empfängersignalen herunter geregelt, was eine Mischregelung entspricht und einen höheren Schaltungsaufwand zu Folge hat, aber durchaus erfolgreich realisiert werden kann, oder zu dem Empfängersignal wird ein zum Sendesignal synchrones Offset-Signal hinzuaddiert, was die Arbeitspunkte 74,76 allesamt durch Dreh-Streckung um den Punkt P0 verschiebt (siehe 74',76' in Fig. 4) und einen neuen Arbeitspunkt 78 für den neuen Fotostrom 77' entstehen lässt. Das Offset-Signal führt zu einem nicht mehr erreichbaren Bereich 79 in dem Diagramm der Fig. 4. Die Erzeugung dieses Offset-Signals ist in Fig. 1 durch einen Kalibrationsblock 81 angedeutet, der für die jeweilige Sender-/Empfängerkombination aus den Sendersignalen 9 bis 12 das Offset-Signal 82 erzeugt, woraus das Signal 82 durch Addition erzeugt wird.

Für die Kalibration eines Gesamtsystems, die Teil das hier beschriebene System ist und einen weiteren selbstständigen erfindungsgemäßen Gedanken bildet, wird nun in einem definierten Messaufbau dieses Gesamtsystem vermessen. Das Gesamtsystem unterscheidet sich vom dem Messsystem beispielsweise dadurch, dass es neben dem Messsystem noch optische Elemente wie Spiegel, Blenden etc. und natürlich das Gehäuse umfasst.

Für die Kalibration wird die Kompensationsdiode K auf einen statischen Pegel geschaltet. Die Kopplung zwischen Empfangsdiode D und Kompensationsdiode K ist erfahrungsgemäß nur sehr schwer zu stabilisieren. Daher ist die Kopplung stets als für einen Applikationstyp gleich, aber von Applikation zu Applikation innerhalb des desselben Typs schwankend anzunehmen.

Die Kalibration erfolgt nun so, dass die schaltbaren Referenzstromquellen 41,42,43 vorgesehen werden, mit denen die Referenzstromversorgung 38 nun so eingestellt wird, dass der gemessene Fotostrom auf stets einen gleichen, applikationsspezifisch vorgegeben Wert eingestellt wird. Hierdurch kann die Ordinaten-Position der Linie 73 in den Fign. 3 und 4 vorgegeben werden. Somit wird sichergestellt, dass ein Arbeitspunkt gefunden wird. Dieser Arbeitspunkt wird dabei typischerweise in der Art eingestellt, dass der Kompensationssendediodenstrom so lange erhöht wird, bis das Kompensationssignal oberhalb des Systemrauschens messbar wird. Anschließend wird das Offset-Signal auf einen solchen Wert eingestellt, dass der unterste Arbeitspunkt eingenommen wird.

### BEZUGSZEICHENLISTE

- 1: Spannungsregler
- 2: Bandgap-Referenz
- 3: Funktionsblock
- 4: Digital-Control-Block
- 5: Minimaloszillator
- 6: Systemoszillator
- 7: Eingangs-Hardware
- 8: Signalleitung
- 9: Signalleitung
- 10: Signalleitung
- 11: Signalleitung
- 14: Funktionsblock
- 16: Funktionsblock
- 17: Ansteuer-/Auswerteeinheit
- 18: Messverstärker
- 19: Messverstärker
- 20: Kapazitäten
- 21: Kapazitäten
- 22: Schalter
- 23: Schalter
- 24: Koppelkondensatoren
- 25: Koppelkondensatoren
- 26: Verstärker
- 27: Stromquelle
- 28: Stromquelle
- 29: Verstärker
- 30: Eingangsleitung
- 31: Eingangsleitung
- 33: Ausgang
- 34: Ausgang
- 35: Differenzstufe
- 36: Verstärker
- 37: Demodulator
- 38: Referenzstromversorgung
- 41: Referenzstromquelle
- 42: Referenzstromquelle
- 43: Referenzstromquelle
- 45: Modulationssignal
- 46: Modulationssignal
- 47: Modulationssignal
- 48: Modulationssignal
- 50: Ausgangssignal
- 53: Schnittstelle
- 54: RX-Zweidraht-Leitung der Schnittstelle
- 55: Interrupt-Ausgang der Schnittstelle
- 56: Messsystem-Reset der Schnittstelle
- 57: Referenzspannungseingang der Schnittstelle
- 61: Schaltungsknoten
- 62: Schaltungsknoten
- 63: Differenzsignal
- 64: Stromquelle
- 65: Stromquelle
- 66: Stromquelle
- 67: Stromquelle
- 69: Zeitpunkt
- 70: Zeitpunkt
- 72: Fotostrom
- 73: Amplitude der Kompensationsdiode repräsentierende Linie
- 74: Arbeitspunkt
- 75: Fotostrom
- 76: Arbeitspunkt
- 77: Fotostrom
- 77': Fotostrom
- 78: Arbeitspunkt
- 79: Bereich
- 81: Kalibrationsblock
- 82: Offset-Signal
- H1: Messsendediode
- H2: Messsendediode
- H3: Messsendediode
- P0: Punkt
- Reif1: Referenzpotenzial
- Ref2: Referenzpotenzial

- A: erste Vorbereitungsphase des Messintervalls
- B: zweite Vorbereitungsphase des Messintervalls
- C: Messphase des Messintervalls
- D: Empfangsdiode
- K: Kompensationsdiode

## Patentansprüche

1. Vorrichtung zur Vermessung einer optischen Übertragungsstrecke, mit
- mindestens einem Messsender (H1,H2,H3) zum Senden eines optischen Messsignals,
- mindestens einem Empfänger (D) zum Empfangen eines optischen Signals,
- einer Ansteuer- und Auswerteeinheit (17), die mit dem mindestens einen Messsender (H1,H2,H3) und mit dem mindestens einen Empfänger (D) verbunden ist und den mindestens einen Messsender (H1,H2,H3) ansteuert sowie das von dem mindestens einen Empfänger (D) empfangene optische Signal als elektrisches Messsignal verarbeitet und bewertet,
- wobei die Ansteuer- und Auswerteeinheit (17) mindestens einen Messverstärker (18,19) aufweist, der einen insbesondere einstellbaren zulässigen Eingangssignalamplituden-Nennbereich oder -Nennpegel aufweist und der bei einem Eingangssignal mit einer Amplitude innerhalb des Nennbereichs bzw. gleich dem Nennpegel weder übersteuert noch untersteuert ist und somit ein verstärktes Ausgangssignal liefert, das innerhalb eines durch eine Unter- und eine Obergrenze definierten Signalbereichs liegt,
- wobei die Ansteuer- und Auswerteeinheit (17) einen Detektor zur Erkennung einer Über- und/oder Untersteuerung und/oder zur Erkennung einer nicht erfolgten Über- und/oder Untersteuerung des mindestens einen Messverstärkers (18,19) durch Vergleich des Ausgangssignals des mindestens einen Messverstärkers (18,19) mit sowohl der Unter- als auch der Obergrenze aufweist und die Güte des Messsignals anhand von von dem Detektor ausgegebenen Detektionssignalen und/oder von von dem Detektor über eine Beobachtungsphase betrachtet ausgegebenen Detektionssignalen bewertet, und
- mindestens einer Störstrahlungs-Kompensationseinheit (26,27,28,29) mit mindestens einem Kompensationssender (K) zur Erzeugung eines Kompensationssignals für den Empfänger (D) oder für das vom Empfänger (D) gelieferte elektrische Signal,
- wobei die Ansteuer- und Auswerteeinheit (17) einen Detektor zur Erkennung eines das Kompensationssignal repräsentierenden Parameters aufweist,
**dadurch gekennzeichnet,**
- **dass** die Ansteuer- und Auswerteeinheit (17) bei während einer Beobachtungsphase erfolgender Ermittlung eines zeitlichen Musters aus durch den Detektor erkannten Unter- und/oder Übersteuerungen des mindestens einen Messverstärkers (18,19) und, sofern detektiert, des Parameters der Störstrahlungs-Kompensationseinheit (26,27,28,29) den mindestens einen Messsender (H1,H2,H3) und die Störstrahlungs-Kompensationseinheit (26,27,28,29) oder deren mindestens einen Kompensationssender (K) in gegenüber der Beobachtungsphase veränderter Weise mit einem Sende- und einem Kompensationssignal ansteuert, das orthogonal zum Muster ist, indem es eine andere Frequenz als die Frequenz des Musters, einen Spread-Spectra-Code aufweist oder frequenzbandbegrenzt ist, wobei in dem Frequenzband die Frequenz des Musters nicht enthalten ist.

2. Vorrichtung nach Anspruch 1, **dadurch gekennzeichnet, dass** der mindestens eine Messverstärker (18,19) mittels einer Kapazität (20,21) rückgekoppelt ist.

3. Vorrichtung nach Anspruch 2, **dadurch gekennzeichnet, dass** die Kapazität (20,21) verstellbar und/oder schaltbar ist.

4. Vorrichtung nach Anspruch 2 oder 3, **dadurch gekennzeichnet, dass** die Kapazität (20,21) wahlweise kurzschließbar ist.

5. Vorrichtung nach einem der Ansprüche 1 bis 4, **dadurch gekennzeichnet, dass** der Detektor in Form eines Fensterdiskriminators ausgeführt ist.

## Claims

1. A device for measuring an optical transmission path, comprising
- at least one measurement transmitter (H1,H2,H3) for transmitting an optical measurement signal,
- at least one receiver (D) for receiving an optical signal,
- a driving and evaluating unit (17) which is connected to the at least one measurement transmitter (H1,H2,H3) and to the at least one receiver (D) and is operative to drive the at least one measurement transmitter (H1,H2,H3) and to process and evaluate the optical signal received by the at least one receiver (D) for use as an electric measurement signal,
- wherein the driving and evaluating unit (17) comprises at least one measurement amplifier (18,19) which has a preferably settable input-signal-amplitude nominal range or nominal level and which, in case of an input signal having an amplitude within the nominal range and respectively equal to the nominal level, is neither over-amplified nor underamplified and thus provides an amplified output signal that is within a signal range defined by an upper and a lower limit,
- wherein the driving and evaluating unit (17) comprises a detector for detecting overamplification and/or underamplification and/or for detecting a non-performed overamplification and/or underamplification of the at least one measurement amplifier (18,19) by comparing the output signal of the at least one measurement amplifier (18,19) to both said upper and said lower limit, and is operative to evaluate the quality of the measurement signal on the basis of detection signals output by the detector and/or of detection signals output by the detector as observed during a monitoring phase, and
- at least one interference radiation compensation unit (26,27,28,29) comprising at least one compensation transmitter (K) for generating a compensation signal for the receiver (D) or for the electric signal delivered by the receiver (D),
- wherein the driving and evaluating unit (17) comprises a detector for detection of a parameter representing the compensation signal,
**characterized in**
- **that** the driving and evaluating unit (17) is operative, upon detection of a temporal pattern of underamplification and/or overamplification of the at least one measurement amplifier (18,19) as detected by the detector during a monitoring phase, and, if detected, of the parameter of the interference radiation compensation unit (26,27,28,29), to drive the at least one measurement transmitter (H1,H2,H3) and the interference radiation compensation unit (26, 27,28,29) or the at least one compensation transmitter (K) thereof in a manner modified relative to the monitoring phase by use of a transmission signal and a compensation signal which is orthogonal to the pattern by having a frequency different from the frequency of the pattern, or by having a spread spectrum code or by being frequency-band-restricted, wherein the frequency of the pattern is not included in the frequency band of the pattern.

2. The device according to claim 1, **characterized in that** the at least one measurement amplifier (18,19) is coupled back by means of a capacitance (20,21).

3. The device according to claim 2, **characterized in that** the capacitance (20,21) is adjustable and/or switchable.

4. The device according to claim 2 or 3, **characterized in that** the capacitance (20,21) is selectively short-circuitable.

5. The device according to any one of claims 1 to 4, **characterized in that** the detector is configured in the form of a window discriminator.

## Revendications

1. Dispositif de mesure d'un chemin optique de transmission, comprenant :
- au moins un émetteur de mesure (H1, H2, H3) destiné à émettre un signal de mesure optique,
- au moins un récepteur (D) destiné à recevoir un signal optique,
- une unité de commande et d'évaluation (17) qui est reliée au au moins un émetteur de mesure (H1, H2, H3) et au au moins un récepteur (D) et commande le au moins un émetteur de mesure (H1, H2, H3), et qui traite et évalue sous forme de signal de mesure électrique le signal optique reçu du au moins un récepteur (D),
- l'unité de commande et d'évaluation (17) comportant au moins un amplificateur de mesure (18, 19) qui présente une plage nominale ou un niveau nominal admissible d'amplitude de signal d'entrée en particulier réglable et qui n'est ni en surmodulation, ni en sous-activation si le signal d'entrée présente une amplitude située dans la plage nominale ou égale au niveau nominal et délivre ainsi un signal de sortie amplifié qui se situe à l'intérieur d'une plage de signal définie par une limite inférieure ou une limite supérieure,
- l'unité de commande et d'évaluation (17) comportant un détecteur apte à détecter une surmodulation et/ou une sous-activation et/ou à détecter l'absence de surmodulation et/ou de sous-activation du au moins un amplificateur de mesure (18, 19) par comparaison du signal de sortie du au moins un amplificateur de mesure (18, 19) avec la limite inférieure et la limite supérieure et évaluant la qualité du signal de mesure à l'aide de signaux de détection émis par le détecteur et/ou de signaux de détection émis par le détecteur pendant une phase d'observation, et
- au moins une unité de compensation de rayonnement parasite (26, 27, 28, 29) pourvu d'au moins un émetteur de compensation (K) pour générer un signal de compensation pour le récepteur (D) ou pour le signal électrique délivré par le récepteur (D),
- l'unité de commande et d'évaluation (17) comportant un détecteur apte à détecter un paramètre représentant le signal de compensation,
**caractérisé en ce que**
- l'unité de commande et d'évaluation (17), lors de la détermination d'un schéma temporel s'effectuant durant une phase d'observation à partir de sous-activations et/ou surmodulations détectées par le détecteur du au moins un amplificateur de mesure (18, 19) et, si détectées, du paramètre de l'unité de compensation de rayonnement parasite (26, 27, 28, 29), commande le au moins un émetteur de mesure (H1, H2, H3) et l'unité de compensation de rayonnement parasite (26, 27, 28, 29) ou le au moins un émetteur de compensation (K) de celle-ci d'une manière autre que durant la phase d'observation, avec un signal d'émetteur et un signal de compensation qui est orthogonal au schéma, par le fait qu'il se situe à une autre fréquence que la fréquence du schéma, contient un code d'étalement de spectre ou a une bande de fréquence limitée, la fréquence du schéma n'étant pas contenue dans la bande de fréquence.

2. Dispositif selon la revendication 1, **caractérisé en ce que** le au moins un amplificateur de mesure (18, 19) est mis en réinjection de signal au moyen d'une capacité (20, 21).

3. Dispositif selon la revendication 2, **caractérisé en ce que** la capacité (20, 21) est réglable et/ou commutable.

4. Dispositif selon la revendication 2 ou 3, **caractérisé en ce que** la capacité (20, 21) peut sélectivement être court-circuitée.

5. Dispositif selon l'une des revendications 1 à 4, **caractérisé en ce que** le détecteur est réalisé sous forme de discriminateur à fenêtre.
